# EUROPÄISCHE PATENTSCHRIFT

(11) **EP 2 814 624 B1**
(45) Veröffentlichungstag und Bekanntmachung des Hinweises auf die Patenterteilung: **06.09.2017**
(21) Anmeldenummer: 13704759.3
(22) Anmeldetag: 07.02.2013
(51) Int. Cl.: B21B 27/10

(54) **WARTUNGSARME DÜSEN-MISCHER-EINHEIT FÜR DIE WALZSPALTSCHMIERUNG**
LOW MAINTENANCE NOZZLE MIXER UNIT FOR ROLLING GAP LUBRICATION
UNITÉ BUSE-MÉLANGEUR SANS ENTRETIEN POUR LA LUBRIFICATION DE FENTE DE LAMINAGE

(30) Priorität: 15.02.2012 EP 12155484
(43) Veröffentlichungstag der Anmeldung: 24.12.2014
(73) Patentinhaber: Primetals Technologies Austria GmbH, 4031 Linz (AT)
(72) Erfinder: BRAIDT, Thomas, A-4040 Linz (AT); KARL, Reinhard, A-4060 Leonding (AT)
(74) Vertreter: Metals@Linz
(86) Internationale Anmeldenummer: PCT/EP2013/052370
(87) Internationale Veröffentlichungsnummer: WO 2013/120750

(56) Entgegenhaltungen:
- DE-A1-102007 042 898
- DE-A1-102008 050 392

## Beschreibung

### Technisches Gebiet

Die Erfindung betrifft eine Vorrichtung zur Schmierung der Walzen eines Walzgerüstes, insbesondere zur Walzspaltschmierung in einem Walzgerüst für ein bandförmigen es Walzgut, wobei mittels einer Misch- und Sprüheinrichtung ein Gemisch aus Wasser und Öl erzeugt wird und dieses Gemisch auf mindestens eine der Walzen des Walzgerüstes und/oder auf die Oberfläche des Walzgutes gesprüht wird.

### Stand der Technik

Es ist bekannt, dass bei der Herstellung eines Metallbandes dessen Oberflächenqualität verbessert werden kann, wenn der Reibungskoeffizient zwischen Arbeitswalzen und Walzgut reduziert wird. Indem bei der Herstellung des Metallbandes beispielsweise ein Schmiermittel eingebracht wird, ist nicht nur die für den Walzvorgang aufzuwendende Energie geringer, sondern es erhöht sich auch die Lebensdauer der Arbeitswalzen eines Walzgerüstes.

Üblicherweise verwendet man zur Walzspaltschmierung eine Emulsion aus Öl und Wasser. Die Emulsion wird in einer Mischeinrichtung erzeugt. Hierfür wird der Mischeinrichtung über Versorgungsleitungen Öl und Wasser zugeführt. Von der Mischeinrichtung gelangt die Emulsion über Rohrleitungen zu einer Anordnung von Sprühdüsen, die entlang des Walzspaltes an der Oberseite und an der Unterseite des Metallbandes platziert sind. Als Sprühdüsen werden beispielsweise Flachstrahldüsen eingesetzt, mittels derer das Gemisch aus Wasser und Öl auf die Arbeitswalzen des Walzgerüstes und/oder auf die Oberfläche des Metallbandes gesprüht wird.

Bei bekannten Vorrichtungen zur Walzspaltschmierung erfolgt die Mischung von Öl und Wasser in einer einzigen zentral angeordneten Mischeinrichtung. Dieser Mischeinrichtung ist eine Vielzahl von Sprühdüsen zugeordnet. Die Verbindung zu den Sprühdüsen erfolgt über Rohrleitungen. Die Länge dieser Rohrleitungen kann mehrere Meter betragen.

Das Dokument EP 1 399 276 B1 beschreibt ein solches Walzspaltschmiersystem, bei dem einem zentralen Mischer mehrere, in Sprühzonen angeordnete Sprühdüsen zugeordnet sind. Die einzelnen Düsen einer Sprühzone werden über Schaltventile aktiviert, so dass unterschiedliche Breiten von Walzbändern in der Walzanlage verarbeitet werden können.

Die zentrale Erzeugung und das anschließende Verteilen der Emulsion auf mehrere Sprühdüsen, haben den Nachteil, dass sich in den Rohrleitungen, trotz hoher und somit reinigender Strömungsgeschwindigkeiten, zwischen Mischer und Düsen Verseifung ausbildet und eine Entmischung stattfinden kann. Je länger die Rohrleitungen, desto länger die Verweildauer der Emulsion und damit das Ausmaß der sich an der Innenfläche der Rohrleitung ausbildenden Ablagerung. Die Rohrleitungen setzen sich mit der Zeit zu und die Wirkung der Walzspaltschmierung lässt nach. Es kann dazu kommen, dass sich Partikel der Verseifung lösen und die Austrittsöffnung einer Sprühdüse verstopfen. Dann versagt die Walzspaltschmierung in diesem Düsenabschnitt gänzlich, wodurch die Oberflächenqualität des Walzbandes erheblich beeinträchtigt werden kann.

Um eine unzureichende Schmierwirkung zu verhindern, muss ein Walzspaltschmiersystem in bestimmten Zeitabständen gewartet werden. Dabei werden verschmutzungskritische Baugruppen, wie Mischer, Sprühdüsen und verbindenden Rohrleitungen gereinigt. In dem Dokument EP 2 040 860 B1 wird zum Zweck der Reinigung vorgeschlagen, zur Mischereinheit nicht nur Wasser und Öl, sondern auch ein Reinigungsmedium, wie Heißwasser oder Wasserdampf zuzuführen. Neben den Versorgungsleitungen für Wasser und Öl wird in einer dritten Versorgungsleitung Heißwasser an den Ort der Verschmutzung geleitet. Das Heißwasser wird in einem Behälter bereitgehalten.

Der Aufwand für die Wartung eines Walzspaltschmiersystems, der ja bei Stillstand der Walzgerüste vorgenommen wird, wird im wesentlichen durch den Umfang der erforderlichen Reinigungsmaßnahmen zum Entfernen der Verschmutzung und Verseifung vorgegeben.

Der Oberbegriff von Anspruch 1 basiert auf der DE 10 2008 050 392 A1.

### Darstellung der Erfindung

Es ist eine Aufgabe der vorliegenden Erfindung, eine Vorrichtung zur Schmierung der Walzen eines Walzgerüstes anzugeben, bei dem der Wartungsaufwand möglichst gering ist. Gelöst wird diese Aufgabe durch eine Vorrichtung mit den Merkmalen des Anspruchs 1 und durch ein Verfahren gemäß den Merkmalen des Anspruchs 9. Vorteilhafte Ausgestaltungen der Erfindung sind in den abhängigen Ansprüchen definiert.

Einem Grundgedanken der Erfindung zufolge sind Mischer und Düse zu einer baulichen Einheit zusammengefasst, das heißt jeder Sprühdüse ist eine Mischereinheit zugeordnet. Die Emulsion wird also nicht zentral erzeugt und dann auf mehrere Sprühdüsen verteilt, sondern dezentral für jede Sprühdüse. Dadurch ist es möglich, die Emulsion dort herzustellen, wo sie auch versprüht wird. Damit entfallen lange Rohrleitungen zwischen Mischer und Düse, die aufgrund der langen Verweilzeit besonders verschmutzungskritisch sind. Da sich die Verseifung weniger stark im Walzspaltschmiersystem ausbildet, muss weniger häufig gereinigt werden. Insgesamt ist dadurch der Wartungsaufwand geringer.
Um Verbindungswege zwischen der Erzeugung und dem Versprühen der Emulsion möglichst kurz zu halten, sind Mischer und Düse in Strömungsrichtung gesehen unmittelbar aneinander angrenzend angeordnet. Besonders günstig ist es, wenn Mischer und Sprühdüse in einem Bauteil integriert sind. Damit gibt es überhaupt keine Verbindungsleitung. Die Verweilzeit der Emulsion in der Misch- und Sprühvorrichtung ist äußerst kurz. Eine kurze Verweilzeit bedeutet, dass die Verseifung sehr geringer ist.

Eine besonders bevorzugte Ausführung ist dadurch gekennzeichnet, dass die Mischeinrichtung aus einer Vormischkammer und einer Hauptmischkammer gebildet ist.

Zur Vermeidung von Verseifungsrückständen wird gemäß der Erfindung die Zuleitung des Öls zur Mischeinrichtung über ein in der Düsen-Mischer-Einheit vorgesehenes Rückschlagventil geführt. Dadurch wird verhindert, dass während eines Reinigungsintervalls, in welchem die Ölzufuhr ja unterbunden ist, Wasser in die Ölzuleitung eindringt und sich dort Verseifung bildet.
Hierbei ist es günstig, wenn der Kanal der Ölzuleitung einen möglichst geringen Durchmesser z.B. kleiner 3 mm aufweist. Dadurch ist die Oberfläche, an der sich Verseifung ablagern kann, gering. Am Ende des Reinigungsintervalls, wenn die Strömung des Öls wieder freigegeben ist, begünstigt die hohe Strömungsgeschwindigkeit in einem Ölkanal ein "Freiblasen" etwaiger Ablagerungen.

Um den Wartungsaufwand weiter zu reduzieren, kann es vorteilhaft sein, wenn für jede Düsen-Mischer-Einheit eine Schnellwechselvorrichtung vorgesehen ist. Eine solche Schnellwechselvorrichtung kann beispielsweise so realisiert sein, dass die Anbringung einer Düsen-Mischer-Einheit in einer Haltevorrichtung mittels einer Rast- oder Schnappverbindung, z.B. einem Bajonettverschluss hergestellt ist. Dadurch kann eine Düsen-Mischer-Einheit bei einem Wartungsstillstand sehr schnell manuell gewechselt werden. Die entnommene Düsen-Mischer-Einheit kann "offline" gereinigt und gegebenenfalls gewartet werden.

### Kurzbeschreibung der Zeichnungen

Zur weiteren Erläuterung der Erfindung wird im nachfolgenden Teil der Beschreibung auf Zeichnungen Bezug genommen, aus denen weitere vorteilhafte Ausgestaltungen, Einzelheiten und Weiterbildungen der Erfindung, anhand eines nicht einschränkenden Ausführungsbeispiels, zu entnehmen sind.
Es zeigen:
- Figur 1: ein Blockschaltbild einer erfindungsgemäß ausgebildeten Walzspaltschmierung, bei der die Misch- und Sprüheinrichtung aus einer Anordnung von Düsen-Mischer-Einheiten gebildet ist;
- Figur 2: ein Blockschaltbild einer Düsen-Mischer-Einheit;
- Figur 3: eine Düsen-Mischer-Einheit, die mittels eines Schnellverschlusses in einer Haltevorrichtung befestigt ist.

### Ausführung der Erfindung

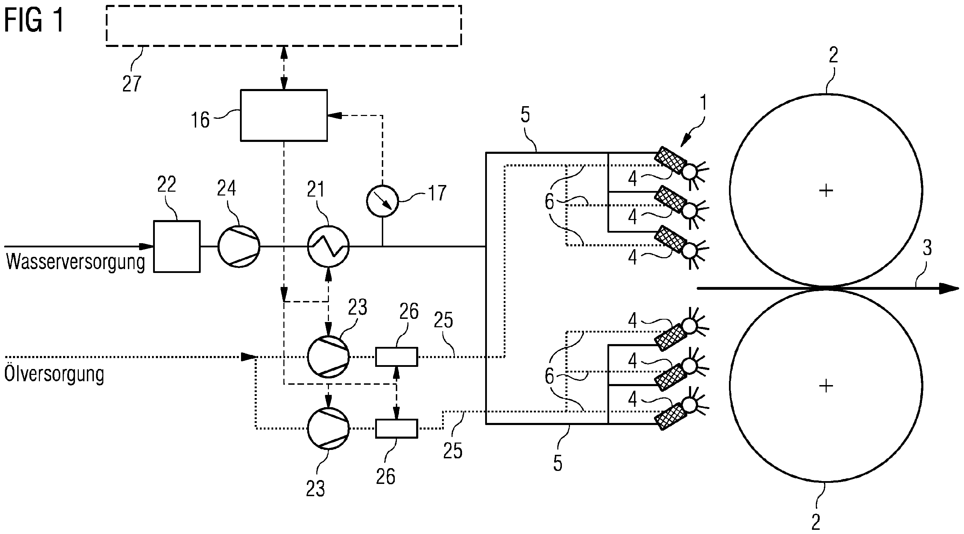

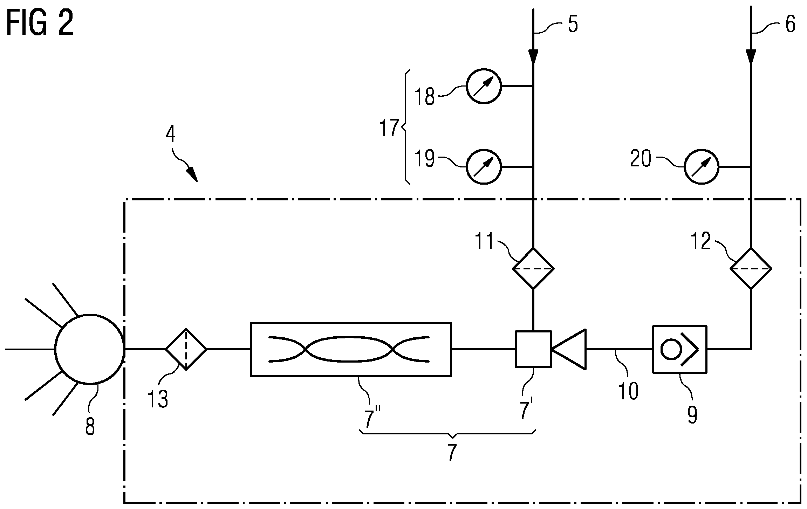

Die Figur 1 zeigt ein Blockschaltbild einer erfindungsgemäß ausgebildeten Walzspaltschmierung. Mit dem Bezugszeichen 1 ist eine Misch- und Sprüheinrichtung gekennzeichnet, die aus mehreren Düsen-Mischer-Einheiten 4 gebildet ist. Mittels dieser Düsen-Mischer-Einheiten 4 wird eine Emulsion, gebildet aus Wasser und Öl, in den Walzspalt eingetragen. Dies erfolgt dadurch, dass die Düsen 8 (siehe Figur 2) der Düsen-Mischer-Einheiten 4 die Emulsion auf die Arbeitswalzen 2 und/oder auf die Oberfläche des Walzbandes 3 sprühen.

Jede Düsen-Mischer-Einheit 4 wird über eine erste Versorgungsleitung 5 mit Wasser und über eine zweite Versorgungsleitung 6 mit Öl versorgt. Düse und Mischer bilden eine Baueinheit.

Die Ölzuleitung zu den Misch- und Sprüheinrichtungen (1) werden in Leitungsbündeln (25) geführt. Die Ölleitung werden entweder von einzelnen Pumpenelementen und/oder über Ölventile, welche schaltend oder kontinuierlich arbeiten, gespeist. Somit kann jede Düsen-Mischer-Einheit mit einem einheitlichen oder einem eigenen Ölflusses, z.B. auch mit 0%, beaufschlagt werden.

Wie aus der Darstellung der Figur 1 leicht zu erkennen ist, erfolgt die Mischung von Öl und Wasser nicht in einem zentralen Mischer, sondern quasi vor Ort, wo die Emulsion durch Sprühen in den Walzspalt eingebracht wird.

Eine Steuereinheit 16, welche im Datenaustausch mit dem Walzprozessrechner 27 steht, steuert dabei die Dosierpumpen 23 in der Ölzufuhr, wie auch die Wasserpumpe 24.

Zum Zwecke der Reinigung der Düsen-Mischer-Einheiten 4 ist in dem Wasserversorgungskreis ein Durchlauferhitzer 21 angeordnet. Mit dieser Heizvorrichtung 21 kann das über die erste Versorgungsleitung 5 zu den Düsen-Mischer-Einheiten 4 strömende Wasser zu Heißwasser erwärmt werden. Durch das Heißwasser können Verbindungsleitungen und Düsen gereinigt und durchgeblasen werden. Dabei gibt die Steuereinheit 16 das Reinigungsintervall vor. Um den Verschmutzungsgrad zu detektieren ist in der Wasserversorgungsleitung 5 eine Sensoreinrichtung 17 (gebildet aus einem Drucksensor 18 und einem Temperatursensor 19 (Figur 2) vorgesehen, deren Messsignal der Steuereinheit 16 zugeleitet ist. Die Steuereinheit 16 verwendet diese Messinformation um Zeitpunkt und Dauer eines Reinigungsintervalls festzulegen.

Die Düsen-Mischer-Einheit 4 ist in Figur 2 in einem Blockschaltbild näher dargestellt. Sie besteht im Wesentlichen aus einer Mischeinrichtung 7, in welcher Wasser und Öl zu einer Emulsion gemischt wird, und einer Düse 8, mittels derer das Gemisch aus Öl und Wasser auf die Arbeitswalzen 2 beziehungsweise in den Walzspalt gesprüht werden kann. Um Schmutzpartikel und losgelöste Ablagerungen der Verseifung von der Austrittsöffnung der Düse 8 möglichst fernzuhalten, sind mehrere Filter vorgesehen: in der Wasserzuleitung der Filter 11, in der Ölzuleitung der Filter 12 und der Filter 13, der die zur Düse 8 strömende Emulsion filtert. Wie der Darstellung der Figur 2 entnommen werden kann besteht die Mischeinrichtung 7 aus einer Vormischkammer 7' und einer Hauptmischkammer 7''.

In einer Reinigungsphase ist die Zufuhr von Öl unterbrochen und durch die Wasserversorgungsleitung 5 strömt Heißwasser mit einer Temperatur von mehr als 60°C. Um zu verhindern, dass dieses Heißwasser in die Leitung der Ölversorgung gedrückt wird, ist das Rückschlagventil 9 vorgesehen. Die Verbindungsleitung 10 zwischen Rückschlagventil und Vormischkammer 7' ist mit einem Strömungsquerschnitt von unter 3 mm² ausgeführt. Dadurch lässt sich eine Verseifung in diesem Abschnitt weitgehend verhindern.

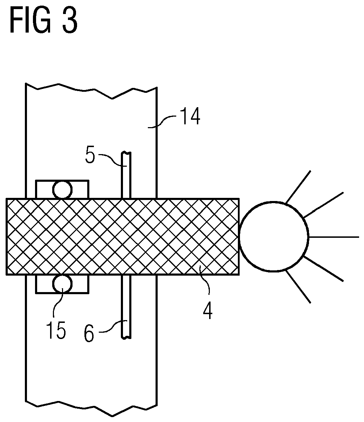

Wie in Figur 3 skizziert, ist jede Düsen-Mischer-Einheit 4 auf einer Haltevorrichtung 14 lösbar mittels eines Bajonettverschlusses 15 befestigt. Im Falle einer Verschmutzung kann eine Düsen-Mischer-Einheit 4 manuell sehr leicht ausgewechselt werden.

Indem die Herstellung der Öl in Wasser Emulsion nicht in einem zentral angeordneten Mischer, sondern durch die dezentrale Mischereinheiten jeweils in örtlicher Nähe einer zugeordneten Düse erfolgt, tritt das Problem der Verseifung in einem weitaus geringerem Maße auf. Durch die erfindungsgemäße Anordnung gibt es keine langen Verbindungsleitungen und damit keine langen Verweilzeiten der Emulsion in Leitungen, die zu einem Zuwachsen der Leitungen führen könnten. Der wesentliche Vorteil der Erfindung liegt damit in einem erheblich reduzierten Wartungsaufwand.

Ein weiterer Vorteil ist darin zu sehen, dass die verteilt angeordneten Düsen-Mischer-Einheiten 4 durch Heißwasser oder Wasserdampf leichter gereinigt werden können, als eine Düsenanordnung herkömmlicher Bauart mit einem zentralen Mischer.

Die Erzeugung des Heißwassers in einem Durchlauferhitzer benötigt im Vergleich mit einem Heißwasserspeicher ein geringeres Bauvolumen am Walzgerüst. Da das Heißwasser in der Wasserzuleitung erzeugt wird, ist eine separate Rohrleitung für Reinigungszwecke nicht erforderlich. Das Walzspaltschmiersystem hat weniger Baukomponenten.

Chemische Reinigungsmittel und Säuren zum Entfernen von Verseifungsrückständen sind nicht erforderlich. Das Wartungspersonal ist nicht durch Gefahrstoffe gefährdet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. So ist vorstellbar, dass für die Reinigung des Walzspaltschmiersystems anstelle des in Figur 1 dargestellten einzigen Durchlauferhitzers, mehrere Durchlauferhitzer geringerer Anschlussleistung verwendet werden, die jeweils einer Düsen-Mischer-Einheit vorgeschaltet sind.

### Zusammenstellung der verwendeten Bezugszeichen

- 1: Misch- und Sprüheinrichtung
- 2: Walzen
- 3: Walzgut, Walzband
- 4: Düsen-Mischer-Einheit
- 5: erste Versorgungsleitung (Wasserversorgung)
- 6: zweite Versorgungsleitung (Ölversorgung) Filter
- 7: Mischeinrichtung
- 7': Vormischkammer
- 7": Hauptmischkammer
- 8: Düse
- 9: Rückschlagventil
- 10: Verbindungsleitung zwischen 9 und 7'
- 11: Filter für Wasser
- 12: Filter für Öl
- 13: Filter für Emulsion
- 14: Haltevorrichtung
- 15: Bajonettverschluss
- 16: Steuereinheit
- 17: Sensoreinrichtung
- 18: Drucksensor
- 19: Temperatursensor
- 20: Drucksensor
- 21: Durchlauferhitzer
- 22: Wasseraufbereitungsanlage
- 23: Dosierpumpe
- 24: Wasserpumpe
- 25: Leitungsbündel
- 26: Ventilblock des Leitungsbündel
- 27: Walzprozessrechner

## Patentansprüche

1. Vorrichtung zur Schmierung der Walzen eines Walzgerüstes, insbesondere zur Walzspaltschmierung in einem Walzgerüst für einen bandförmiges Walzgut, wobei mittels einer Misch- und Sprüheinrichtung (1) eine Emulsion aus Wasser und Öl erzeugt wird und diese Emulsion auf mindestens eine der Walzen (2) des Walzgerüstes und/oder auf die Oberfläche des Walzgutes (3) gesprüht wird, wobei die Misch- und Sprüheinrichtung (1) aus einer Anordnung von mehreren Düsen-Mischer-Einheiten (4) gebildet ist, wobei jede dieser Düsen-Mischer-Einheiten (4) zu einer baulichen Einheit zusammengefasst ist, denen jeweils über eine erste Versorgungsleitung (5) Wasser und über eine zweite Versorgungsleitung (6) Öl zugeleitet ist,
wobei das über die erste Versorgungsleitung (5) herangeführte Wasser und das über die zweite Versorgungsleitung (6) herangeführte Öl einer Mischeinrichtung (7) zugeleitet wird und das darin gebildete Gemisch aus Wasser und Öl unmittelbar darauf folgend einer sich an die Mischeinrichtung (7) anschließenden Düse (8) zugeleitet ist, **dadurch gekennzeichnet, dass** die Zuleitung des Öls zur Mischeinrichtung (7) über ein in der Düsen-Mischer-Einheit (4) vorgesehenes Rückschlagventil (9) geführt ist, und
wobei mindestens ein Durchlauferhitzer (21) in der ersten Versorgungsleitung (5) angeordnet ist, mit dem das zu den Düsen-Mischer-Einheiten (4) strömende Wasser während einer Reinigungsphase erwärmt werden kann.

2. Vorrichtung nach Anspruch 1, **dadurch gekennzeichnet, dass** jeder Düse (8) eine Mischeinrichtung (7) zugeordnet ist.

3. Vorrichtung nach Anspruch 1 oder 2, **dadurch gekennzeichnet**, das jeder einzelnen Düsen-Mischer-Einheiten (4) eine Ölleitung (6) aus dem Leitungsbündel (25) zuordenbar ist.

4. Vorrichtung nach Anspruch 3, **dadurch gekennzeichnet, dass** jeder Düsen-Mischer-Einheiten (4) ein Ölventil im Ventilblock des Leitungsbündels (26) oder eine Dosierpumpe (23) oder ein Pumpenelement einer Dosierpumpe zugeordnet ist, so daß der Ölvolumenstrom für jede Düsen-Mischer-Einheiten (4) gesondert einstellbar ist.

5. Vorrichtung nach einem der Ansprüche 1 bis 3, **dadurch gekennzeichnet, dass** in der Düsen-Mischer-Einheit (4) ein Filter (11) für Wasser, ein Filter (12) für Öl und ein Filter (13) für das Gemisch aus Wasser und Öl vorgesehen ist.

6. Vorrichtung nach einem der vorstehenden Ansprüche, **dadurch gekennzeichnet, dass** die Düsen-Mischer-Einheit (4) mittels einer lösbaren Verbindung in einer Haltevorrichtung (14) gehalten ist.

7. Vorrichtung nach Anspruch 6, **dadurch gekennzeichnet, dass** die Verbindung eine Rast- oder Schnappverbindung ist.

8. Vorrichtung nach einem der vorstehenden Ansprüche, **dadurch gekennzeichnet, dass** die Düsen-Mischer-Einheit (4) in einem Walzwerk für Stahl eingesetzt wird.

9. Verfahren zur Schmierung der Walzen eines Walzgerüstes, insbesondere zur Walzspaltschmierung in einem Walzgerüst für Walzband, wobei eine Vorrichtung nach einem der Ansprüche 1 bis 8 verwendet wird.

## Claims

1. Device for lubricating the cylinders of a roll stand, especially for roll-nip lubrication in a roll stand for a strip-shaped rolling stock, wherein an emulsion of water and oil is created by means of a mixing and spraying device (1) and this emulsion is sprayed onto at least one of the cylinders (2) of the roll stand and/or onto the surface of the rolling stock (3), wherein the mixing and spraying device (1) is formed from an arrangement of a number of spray mixer units (4), wherein each of these spray mixer units (4) is grouped into one constructional unit, to which water is conveyed via a first supply line (5) and oil is the conveyed via a second supply line (6) in each case, wherein the water supplied by the first supply line (5) and the oil supplied via the second supply line (6) are conveyed to a mixing device (7) and that the mixture of water and oil formed therein is conveyed immediately thereafter to a nozzle (8) adjacent to the mixing device (7),
**characterised in that**
the supply line of the oil to the mixing device (7) is routed via a stop valve (9) provided in the nozzle mixer unit (4), and
wherein at least one continuous flow heater (21), with which the water flowing to the nozzle mixer units (4) can be heated up during a cleaning phase, is disposed in the first supply line (5).

2. Device according to claim 1, **characterised in that** each nozzle (8) is assigned a mixing device (7).

3. Device according to claim 1 or 2, **characterised in that** each of the individual nozzle mixer units (4) can be assigned an oil line (6) from the line bundle (25).

4. Device according to claim 3, **characterised in that** each of the nozzle mixer units (4) is assigned an oil valve in the valve block of the line bundle (26) or a dosing pump (23) or a pump element of a dosing pump, such that the oil volume flow can be set separately for each of the nozzle mixer units (4).

5. Device according to one of claims 1 to 3, **characterised in that** a filter (11) for water, a filter (12) for oil and a filter (13) for the mixture of water and oil is provided in the nozzle mixer unit (4).

6. Device according to one of the preceding claims, **characterised in that** the nozzle mixer unit (4) is held by means of a releasable connection in a holder device (14).

7. Device according to claim 6, **characterised in that** the connection is a latching or snap-in connection.

8. Device according to one of the preceding claims, **characterised in that** the nozzle mixer unit (4) is used in a rolling mill for steel.

9. Method for lubricating the cylinders of a roll stand, especially for roll nip lubrication in a roll stand for rolled strip, wherein a device according to one of claims 1 to 8 is used.

## Revendications

1. Dispositif de lubrification des cylindres d'une cage de laminoir, notamment de lubrification de l'emprise dans une cage de laminoir destinée à un produit à laminer en bande, un dispositif de mélange et de pulvérisation (1) produisant une émulsion d'eau et d'huile et cette émulsion étant pulvérisée sur au moins un des cylindres (2) de la cage de laminoir et/ou sur la surface de la matière à laminer (3), le dispositif de mélange et de pulvérisation (1) étant formé d'un ensemble de plusieurs unités buse-mélangeur (4), chacune de ces unités buse-mélangeur (4) étant réunie en une unité de construction dont chacune est alimentée en eau par une première conduite d'alimentation (5) et en huile par une deuxième conduite d'alimentation (6), l'eau amenée par la première conduite d'alimentation (5) et l'huile amenée par la deuxième conduite d'alimentation (6) alimentant un dispositif de mélange (7) et le mélange d'eau et d'huile formé dans celui-ci alimentant directement et immédiatement une buse (8) adjacente au dispositif de mélange (7),
**caractérisé en ce qu'**un clapet de non-retour (9) situé dans l'unité buse-mélangeur (4) est intercalé dans l'alimentation de l'huile vers le dispositif de mélange (7),
au moins un chauffe-eau rapide (21) permettant de chauffer l'eau s'écoulant vers les unités buse-mélangeur (4) pendant une phase de nettoyage étant disposé dans la première conduite d'alimentation (5).

2. Dispositif selon la revendication 1, **caractérisé en ce qu'**un dispositif de mélange (7) est associé à chaque buse (8).

3. Dispositif selon la revendication 1 ou 2, **caractérisé en ce qu'**une conduite d'huile (6) du faisceau de conduites (25) peut être associé à chacune des unités buse-mélangeur (4) individuelles.

4. Dispositif selon la revendication 3, **caractérisé en ce qu'**une vanne d'huile de l'ensemble de vannes du faisceau de conduites (26), ou une pompe doseuse (23) ou un élément de pompe d'une pompe doseuse, est associé(e) à chaque unité buse-mélangeur (4), de façon que le débit d'huile puisse être réglé séparément pour chaque unité buse-mélangeur (4).

5. Dispositif selon l'une des revendications 1 à 3, **caractérisé en ce qu'**un filtre (11) pour l'eau, un filtre (12) pour l'huile et un filtre (13) pour le mélange d'eau et d'huile sont situés dans l'unité buse-mélangeur (4).

6. Dispositif selon l'une des revendications précédentes, **caractérisé en ce que** l'unité buse-mélangeur (4) est maintenue dans un dispositif de support (14) au moyen d'une liaison démontable.

7. Dispositif selon la revendication 6, **caractérisé en ce que** la liaison est un assemblage par enclenchement ou par encliquetage.

8. Dispositif selon l'une des revendications précédentes, **caractérisé en ce que** l'unité buse-mélangeur (4) est utilisée dans un laminoir à acier.

9. Procédé de lubrification des cylindres d'une cage de laminoir, notamment de lubrification de l'emprise dans une cage de laminoir pour laminer des bandes, un dispositif selon l'une des revendications 1 à 8 étant utilisé.
